# EUROPEAN PATENT APPLICATION

(11) **EP 1 220 415 A2**
(43) Date of publication of application: **03.07.2002**
(21) Application number: 01310948.3
(22) Date of filing: 28.12.2001
(51) Int. Cl.: H02J 7/00

(54) **Handset holder**

(30) Priority: 28.12.2000 US 259069 P
(71) Applicant: Nokia Japan Co., Ltd., Meguro-ku, Tokyo 153-0064 (JP)
(72) Inventor: Yau, William, Tokyo 150-0011 (JP); Kwong, Kenneth, Tien Mun, Hong Kong (CN); Wan, William, Kowloon, Hong Kong (CN); Wai, Kenney, Kowloon, Hong Kong (CN)
(74) Representative: Read, Matthew Charles

(57) **Abstract**

An electronic device holder, having a base having an insert aperture (16) therein, an insert (14A-14C) positioned in the insert aperture, and a one-piece flexible member (4) connected to the base for supporting an electronic device (100) disposed in the insert.

## Description

The present invention relates to handset holders and, more particularly, to a handset holder with interchangeable handset interface.

Mobile handsets or terminals, such as used with mobile telecommunication networks, are generally not free standing and are usually placed in freestanding handset holders when not being carried by users. Such handset holders function not merely as holders holding the handset therein in a desired orientation, but may include other functions such as charging the battery of the handset or connecting the handset to a local communication network such as a local area network (LAN). Conventionally, each handset model has a corresponding handset holder with a handset interface which conforms to the given handset model, but which is otherwise unsuitable for use with other handset models. Handset users will typically purchase a handset holder corresponding to the handset model they are using. However, each time a user changes or acquires a different handset model, the user also has to acquire another handset holder corresponding to the different handset model due to the lack of interoperability between conventional handset holders and different handset models. The lack of interoperability between conventional handset holders and different handset models also impairs manufacturers of handset accessories. Such manufacturers fabricate the components such as for example the handset interface, holder casing, charging connection ports, contact pads, or connector terminal, making up the handset holders. Different components are used with different handset holders and the manufacturers lose the cost benefits derived from efficiencies of scale. The present invention overcomes the problems with conventional handset holders as will be described in greater detail below.

The present invention provides an apparatus to hold an electronic device and a method of holding an electronic device.

In the first embodiment is an electronic device holder, comprising: a base having an insert aperture therein; an insert positioned in the insert aperture; and a one-piece flexible member connected to the base for supporting an electronic device disposed in the insert.

The second embodiment is an electronic power station, comprising: a base; a flexible arm having spindles attached to the base, the base containing at least one corresponding opening for the spindles, the base also having an insert aperture therein; and an interchangeable insert removably disposed in the insert aperture for holding an electronic device, wherein the flexible arm cushions the electronic device, wherein the interchangeable insert is selected from a number of different interchangeable inserts which can be interchanged in the insert aperture to accommodate different electronic devices.

The third embodiment is a freestanding handset holder, comprising: an electrically conductive insert contained in an electrically wired casing for holding a handset; and a generally U-shaped frame attached to the electrically wired casing in a raised position, wherein the U-shaped frame cushions the handset held in the insert.

The fourth embodiment is a method of holding an electronic device, comprising the steps of: providing an electrically connectable base with an insert aperture and the electrically connectable base having at least one base opening for at least one pivotable arm with at least one spindle; placing an electrically connectable insert into the insert aperture; placing the at least one pivotable arm spindle into the at least one base opening; placing the electronic device in the electrically conductable insert to complete a circuit through the electrically connectable insert and the electrically connectable base; and positioning the at least one pivotable arm to brace the electronic device, wherein the electronic device can be removed and the pivotable arm placed in a down position by including the steps of: pushing the at least one pivotable arm in a downward direction flexing the at least one pivotable arm; and snapping the at least one pivotable arm having the at least one spindle into a down position.

The foregoing aspects and other features of the present invention are explained in the following description, taken in connection with the accompanying drawings, wherein:
Fig. 1 is an exploded perspective view of a handset holder incorporating features of the present invention, and a mobile handset terminal;
Fig. 2 is a perspective view of the of the handset holder in Fig. 1 showing a pivotable arm of the handset holder in an up position;
Figs. 3A-3C are respectively a perspective view of a first interchangeable handset interface insert for use with the handset holder in Fig. 1, a perspective view of a second interchangeable handset interface insert for use with the handset holder, and a perspective view of a third interchangeable handset interface insert for use with the handset holder;
Fig. 4 is another perspective view of the handset holder in Fig. 1 showing the pivotable arm of the holder in a down position;
Fig. 5 is a side elevation view of the handset holder in Fig. 1;
Fig. 6 is a cross-sectional view of one of the interchangeable handset interface inserts taken along line 6-6 in Fig. 3b; and
Fig. 7 is a perspective view of the handle of the handset holder in Fig. 1.

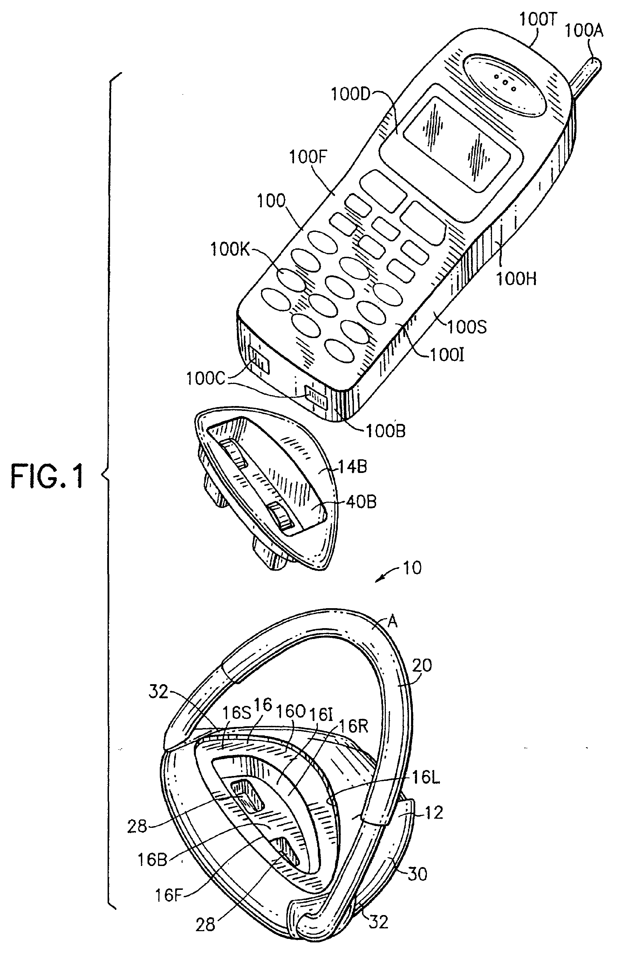

Referring to Fig. 1, there is shown an exploded perspective view of a handset holder 10 incorporating features of the present invention, and a mobile handset terminal. Although the present invention will be described with reference to the single embodiment shown in the drawings, it should be understood that the present invention can be embodied in many alternate forms of embodiments. In addition, any suitable size, shape or type of elements or materials could be used.

Referring still to Fig. 1, the mobile handset 100 is preferably a terminal such as may be used with a mobile telecommunications network (not shown). The handset 100 includes a housing 100H which surrounds suitable electronic components such as for example printed circuit boards, processors, transceivers, (not shown) for conducting bi-directional communications over the mobile telecommunications network with other mobile handsets, land line telephones, and paging devices (not shown). The handset housing 100H includes a user interface 100I which may comprise for example, a keypad 100K and display 100D. An antenna 100A may extend from the top 100T of the handset housing 100H. The bottom 100B of the handset housing 100H may be provided with contacts 100C, or ports (not shown) for interfacing the handset to a charge element, or to an electronic connector as will be described in greater detail below. As seen in Fig. 1, the housing 100H of the handset 100 has a general hexahedron shape with substantially flat sides, front and rear surfaces 100S, 100F. Although the present invention will be described below with particular reference to the mobile handset 100 shown in Fig. 1, the present invention is equally applicable to handsets having a housing of any desirable shape. The present invention is also applicable to any other kind of mobile terminal such as for example a paging device.

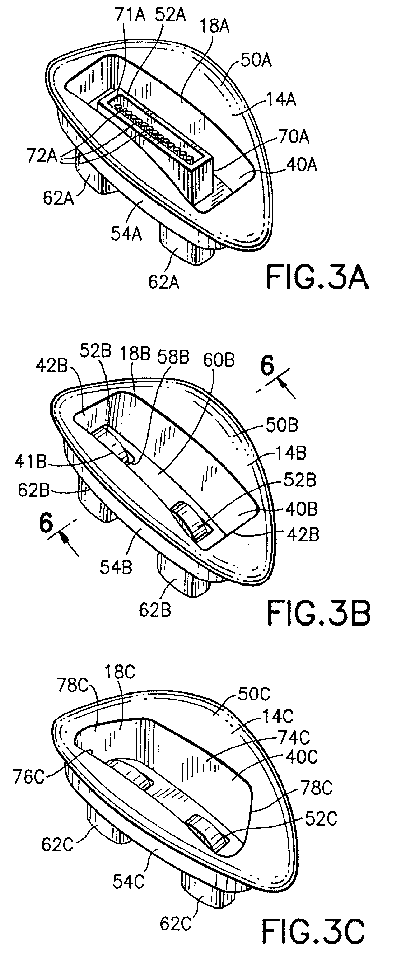

Referring now to Figs. 1, and 3A-3C, the freestanding handset holder 10 generally comprises a casing 12, and a mobile handset interface insert (similar to insert 14B in Fig. 1). The freestanding handset holder 10 shown in Fig. 1 is a freestanding handset holder such as one that may be placed on any suitable surface such as a desktop, or shelf. Although the present invention is described below with particular reference to the freestanding holder 10 in Fig. 1, the present invention is applicable equally to any other type of handset holder. The handset casing 12 has an aperture 16 therein for holding one of a number of interchangeable handset interface inserts 14A-14C (see also Figs. 3A-3C). Each handset interface insert 14A-14C is removably held in the aperture 16 of the casing 12. Each of the handset interface inserts 14A-14C has a receptacle therein adapted to interface with a handset having a given configuration. Interface insert 14B shown in Figs. 1 and 3B is capable of interfacing with the handset 100 shown in Fig. 1. Accordingly, when handset 100 is to be placed into the handset holder 12, insert 14B is installed into casing 12. In the event a different model handset, having a differently configured casing (not shown), is to be placed in the handset holder, the handset interface insert 14B is removed from the casing and replaced with one of the other interchangeable handset interface inserts 14A, 14C (see Figs. 3A, 3C) suitable for use with a different model handset. As can be seen in Fig. 1, casing 12 is also provided with a pivotable arm 20. The arm 20 may be pivoted to a raised position A in which the arm 20 provides a supporting brace to the handset mounted into the interface insert 14A-14C of the casing 12. The arm 20 may also be pivoted to a down, or stowed position as will be described in greater detail below.

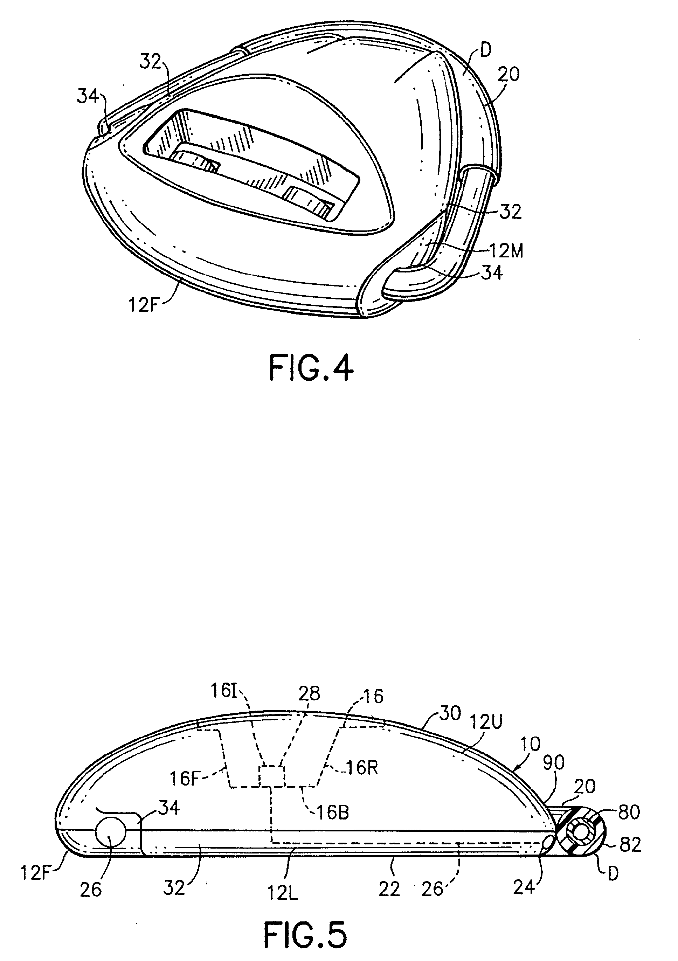

In greater detail now, and with reference to Figs. 1, 2, 4 and 5, handset holder casing 12 is preferably made from a suitable plastic, though it may be made from any other suitable material including metal. As seen in Fig. 5, the casing 12 may comprise an upper section 12U, and lower section 12L. The upper section 12U, and lower section 12L may be formed by injection molding or any other suitable forming means. The casing sections 12U, 12L have any suitable size, and shape as shown in Figs. 1, 2, 4 and 5, to house components therein such as for example, printed circuit boards, resistors, capacitors, contacts, connectors, processors (not shown) for performing various desired functions. The lower section 12L of the casing has a seating surface 22 for seating the handset 10 against a suitable support surface. The lower section 12L may also be provided with one or more ports 24 (only one port 24 is shown in Fig. 5 for example purposes) for mating connector plugs of wires (not shown) from a power source (such as may be used for charging), or wires of a LAN (not shown) to the handset holder. The upper and lower sections 12U, 12L of the holder casing 12 may have conjugal fittings (not shown) adapted to be snapped together to form a casing 12. As seen best in Figs. 1 and 5, the upper section 12U of the casing has an insert receiving aperture 16 formed therein. The aperture 16 may be formed in any suitable location in the casing. The aperture 16 is shown in Fig. 1 as having an inner portion 16I, and an outer portion 16O. The inner portion 16I has a generally elliptical, or oval shape. The front 16F, and rear sides 16R of the inner portion 16I are generally tapered inwards towards the bottom 16B of the aperture (see Fig. 5). The bottom 16B of the aperture 16 preferably has openings allowing contact pads, or spring contacts 28 to extend through the casing into the aperture 16. The spring contacts 28, which may comprise flexible metal tabs mounted to the casing 12, are connected by suitable means such as wires 26 to the connector port 24 of the casing 12. Although, in the preferred embodiment, the casing 12 is shown has having two spring contacts 28, in alternate embodiments the aperture and the casing for the handset interface insert may have any suitable number of contacts located in any suitable surface of the insert aperture including the sides. The outer section 16O of the aperture 16 extends between the inner section 16I and the outer surface 30 of the casing 12. The outer section 16O of the aperture, generally comprises a seating surface 16S surrounding the inner section 16I. At the outer edge of the seating surface 16S, there is a generally vertical lip 16L (see Fig. 1).

As can be seen in Figs. 1 and 5, in the preferred embodiment, the upper and lower casing sections 12U, 12L have cutouts formed towards the front 12F so that when the upper and lower sections 12U, 12L are mated, a pair of openings 26 are formed in the sides 32 of the casing 12. In alternate embodiments, the openings may be formed entirely in the upper, or lower sections of the casing. Immediately adjacent to the rear of the openings 26, the upper and lower sections 12U, 12L are shaped to define shoulders 34 formed into the sides 32 of the casing. Shoulders 34 transition outwards between the wider midsection 12M, and narrower front 12F of the casing 12 as shown in Figs. 4 and 5.

Figs. 3A-3C respectively show perspective views of three different interchangeable handset interface inserts 14A-14C for use with a handset holder 10 in accordance with the present invention. The interchangeable interface inserts 14A-14C shown in Figs. 3A-3C are merely examples of suitable interchangeable inserts and it is within the scope of the present invention that the handset holder may have any number of interchangeable handset interface inserts similar to inserts 14A-14C. As can be realized from Figs. 3A-3C, the interface inserts 14A-14C are substantially similar to each other except as otherwise described below. Similar features of the inserts 14A-14C have similar reference numbers. The features of the inserts 14A-14C will be described below with particular reference to insert 14B shown in Figs. 3B, and 6. Fig. 6 is a cross section of insert 14B taken through line 6-6 in Fig. 3B.

The interchangeable handset interface insert 14B, generally includes an insulating frame 48B, and contacts 52B. The insulating frame 48B is preferably a one-piece member made of plastic, or any other suitable insulating material. The insulating frame 48B may be made by injection molding, or any other suitable forming means. The insulating frame 48B may include a main, or central section 54B which defines a handset receiving receptacle, or chamber 40B therein. The chamber 40B has an opening at the top 56B of the insert 14B. The chamber, and opening are sized and shaped to conform to the exterior shape of the bottom 100B of the housing 100H of the handset 100. In the preferred embodiment, the inside of the opening of chamber 40B may have sloped walls (not shown) forming guide means 41B (see Fig. 3B) for guiding the bottom of the handset 100 into the chamber 40B when inserting the handset into the chamber. The outer walls 48B, 49B of the central portion 54B of the interchangeable interface insert 14B may be sloped to conform to the slope of the inner walls 16F, 16R of the aperture 16 (see Fig. 5) in the casing 12. The central portion 54B of the insert 14B has a lip 50B surrounding the central portion. The lip 50B projecting from the central portion 54B is sized so that it may form a close fit within the rim 16L of the aperture 16 in the casing 12, when the insert is inserted into the aperture (see Fig. 1). The lower surface of lip 50B is disposed to be seated against the seating surface 16S of the insert aperture 16 in the casing 12. As can be seen in Fig. 3B, the bottom 60B of the chamber 40B has openings 58B into which are fitted contacts 52B. The contacts 52B are made of metal, such as copper, or aluminum alloy, and may be press fit into the openings 58B of the insert. The contacts may include flexible spring tab portions located inside the aperture 40B. The contacts also have a terminal portion 62B projecting from the bottom 64B of the insert 14B. The contacts 52B in the handset receiving receptacle 40B of the insert 14B are arranged to contact the contact pads 100C on the bottom of handset 100 (see Fig. 1) when the handset is placed in the receiving receptacle. Terminals 62B of contacts 52B are configured to contact spring contacts 28 in holder casing 12 (see Fig. 1) when the insert 14B is placed into the aperture 16 of the casing.

Fig. 3A shows another interchangeable handset interface insert 14A for use with handset holder 10 in Fig. 1. As noted before, insert 14A is substantially similar to insert 14B described above, and shown in Figs. 3B and 6, except as otherwise noted below. Handset interface insert 14A has a handset receiving receptacle 40A which is similar to receptacle 40B in insert 14B, and hence, conforms substantially to the bottom of a handset housing having a shape similar to housing 100H of handset 100. As can be seen from Fig. 3A, handset interface 14A is different than insert 14B (Fig. 3B) in that, insert 14A is provided with a multi-pin/contact connector 52A in place of spring contacts 52B of insert 14B. The multi-pin/contact connector 52A located in the receptacle 40A of insert 14A may be a uniform serial bus (USB) connector, or any other suitable type of multi-pin/contact connector. As such, the connector 52B generally comprises a housing 70A which may be made of metal for EMI shielding, or otherwise may be made of an insulating plastic. The housing 70A defines an opening 71A for inserting a female connector (not shown) of a corresponding handset (not shown) into the housing 70A. The connector housing 70A surrounds multiple pin contacts 72A which are arranged to be mated to conjugal contacts in the female connector, when the female connector is inserted into the housing 70A. In alternate embodiments, the interchangeable handset interface insert may be provided with a female connector having multiple receptacle contacts therein for mating to a male connector on a handset. The pin contacts 72A of connector 52A terminate into terminals 62A which are arranged to contact the spring contacts 28 of the holder casing 12 (see Fig. 1) when insert 14A is placed into aperture 16 of the casing 12.

Referring now to Fig. 3C, there is shown still another representative interchangeable handset interface insert 14C for use with the handset holder 10 of the present invention. Insert 14C for handset holder 10 is also substantially similar to inserts 14A, 14B with respect to the outer configuration of the insert which mates to the holder casing 12. Insert 14C, however, has still another different handset interface configuration than interchangeable inserts 14A, 14B. For example, as shown in Fig. 3C, handset receptacle 40C of insert 14C is shaped to conform to still another configuration handset housing from that of handset housing 100H shown in Fig. 1. The receptacle 40C of insert 14C has a back wall 74C which is more narrow than the front wall 76C of the receptacle. The sidewalls 78C connecting the front and rear walls 76C, 74C are slanted inwards, and are provided with a convex curvature. The insert 14C has a pair of contacts 52C similar to spring contacts 52B (see Fig. 3B) adapted to interface with contact pads on a mating handset (not shown) similar to the contact pads 100C on handset 100 (see Fig. 1). In alternate embodiments, the receptacle of the interchangeable insert may be provided with any other suitable contacts, such as for example, multi-pin/contacts connectors similar to that shown in Fig. 3A. In other alternate embodiments, the interchangeable handset insert may have a handset receptacle of any suitable shape or size conforming to any shape of mobile handset housing.

Referring now to Fig. 7, there is shown a perspective view of a pivotable arm 20 of the handset holder 10. Arm 20 generally comprises a frame 80 with a padding section 82 mounted thereon. In the preferred embodiment, frame 80 is a one-piece member which is resiliently flexible. The frame 80 may be formed from a generally cylindrical plastic, or metal tubing which is curved into a general U-shape as shown in Fig. 7. The U-shape of the arm generally conforms to the outer perimeter of casing 12 (see also Fig. 4). The gauge, and diameter of the plastic or metal tubing forming the frame 80 is sized to allow the frame to be resiliently flexible. Accordingly, the arms 84 of the U-frame 80 may be resiliently deflected towards or away from each other. As can be seen in Fig. 7, the ends of the arms 84 are bent inwards forming spindles 86. The spindles 86 are sized and shaped to be received into openings 26 (only one of which is seen in Fig. 5) in the casing 12. The padding section may be made from any suitable elastomeric material. As can be seen in Fig. 5, the padding section 82 is disposed around the frame 80 generally in the region of the top 92 of the U-shape. The padding section 82 may be formed directly around the frame 80, such as for example by dipping, or may be formed separately and provided with a seam allowing the padding to be wrapped around the frame 80. In alternate embodiments, the resiliently flexible arm may have any other suitable shape or form.

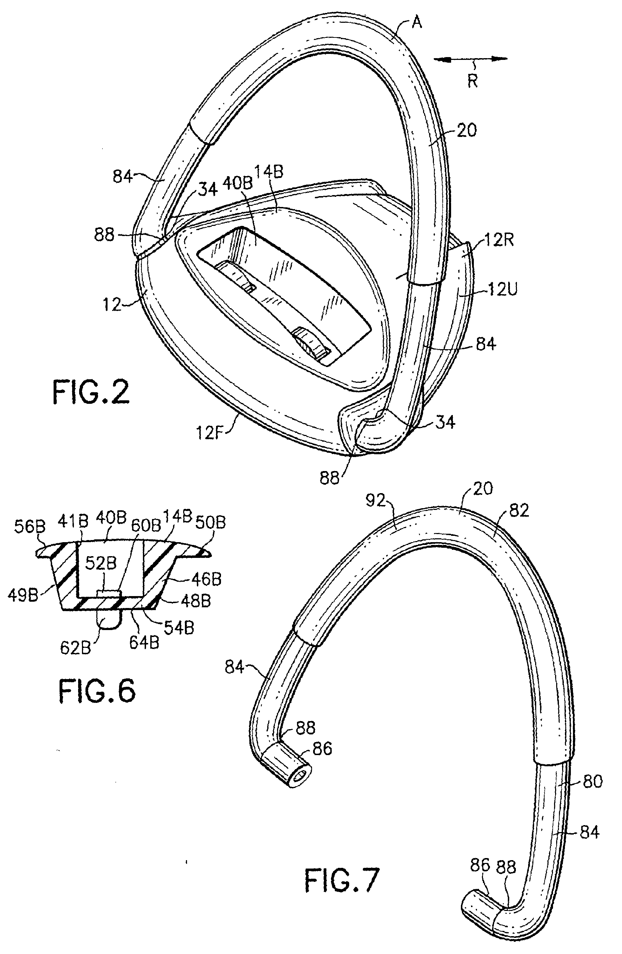

The arm 20 is mounted to the casing 12 by resiliently deflecting the arms 82 of frame 80 sufficiently far apart from each other to allow insertion of spindles 86 into openings 26 of the casing 12. When the spindles are aligned with the openings, the deflected arms are allowed to spring back to insert the spindles 86 into the openings 26. The spindles 86 extend sufficiently far into the casing 12 through openings 26 to rotatably capture the arm 20 to the casing 12. The spindles 86 are free to rotate within openings 26, and hence, the arm 20 may rotate relative to casing 12 (in the direction indicated by arrow R in Fig. 2) between an up position A, shown in Figs. 1 and 2, and a down position D shown in Figs. 4 and 5. In the up position A, the curved elbows 88 connecting the spindles 86 to the arms 84 of the arm 20 (see Fig. 7) rest on the shoulders 34 formed in the casing 12. Hence, shoulders 34 support the arm 20 in the up position A (see Figs. 1 and 2). The rounded leading edge of the shoulders 34 acts as a camming surface against elbows 88 when the arm 20 is rotated to the down position D. As the arm 20 is rotated down, the shoulders 34 cam the resiliently flexible arms 84 apart from each other allowing the elbows 88 and arms 84 to swing past the shoulders 34. The rear edge 90 of the casing 12 (see Fig. 5) acts as a cam surface against the top 92 of the arm 20 when the arm 20 is rotated to the down position D. The casing rear edge 90 cams the resiliently flexible arm 20 away from the casing 12 so that the spindles 86 in openings 26 of the casing 12 are flexed. This biases the top 92 of the arm 20 against the rear edge 92 of the casing 12 so that moving the arm to the down position D causes an audible snap. When the arm is raised from the down position D to the up position A, the elbows 88 again move past shoulders 34 which allows the arms 84 of the frame 80 to resile inwards again with an audible snap. This alerts the user that the arm is in the up position A shown in Fig. 2.

In accordance with the scope of the present invention, when a user desires to place a handset in the handset holder 10, the user selects one of the interchangeable handset interface inserts 14A-14C corresponding to the given handset, from the number of interchangeable handset interface inserts 14A-14C available for use with the handset holder 10. The selected insert 14A-14C is then inserted into the holder 10. By way of example, in the event that the handset is similar to handset 100, the user may select insert 14B from among the interchangeable inserts 14A-14C. Insert 14B may then be inserted into aperture 16 of the casing 12 (see Fig. 1). Installation of insert 14B into aperture 16 effects a connection between spring contacts 52B in the insert and contacts 28 in the casing 12. The handset may then be inserted into the receiving receptacle 40B of interchangeable insert 14B mounted in the casing 12. Insertion of the handset 100 into receptacle 40B effects a connection between the contacts pad 100C on the handset 100 and the spring contacts 52B of the insert 14B. The rotatable arm may be raised to the up position A (see Fig. 2). In this position, the arm serves as support brace supporting the handset 100 placed into the handset holder 10. In the event the user desires to place a handset different than handset 100 into holder 10, the user may remove the interchangeable insert 14B from the casing 12, and replace it with another one of the interchangeable handset interface inserts 14A, 14C suitable for interfacing with the different handset. Thus, the user may use a common holder 10 for supporting any type of mobile handset.

As phone technology evolves, so does the phone's shape and style. Accessories are not always bought by everyone so that the investment does not reap as great a return. If the parts can remain as identical as that for the previous phone, the cost of a new accessory is greatly reduced. The present invention achieves this by having interchangeable inserts 14A-14C used with a common holder. For each type of phone a different insert is used together with the corresponding charging/data contacts. As the interface part is smaller it is cheaper than replacing a complete cover. The tool to mold the part is also smaller, and therefore cheaper. Injection molding pressures can be lower so molding defects can be reduced. Less material is used and therefore the holder is less expensive. The holder 10 of the present invention can be used for GSM, PDC, WDCMA or CDMA, i.e. all accessories globally. In addition, other interchangeable inserts for the holder may have additional features such as a "hot-synch" button, which can be accommodated as the insert 14A-14C is large enough to accept an electrical switch (not shown) of some kind.

The handset holder 10 of the present invention, has a low profile. Additional support for the phone is provided by the pivotable support-arm 20. Therefore, the overall profile of the holder can remain streamlined while the additional feature of the rotatable arm does not detract from the profile of the holder 10. The support arm 20 rotates out of the way and clips behind the casing 12 when the desk stand is not being used. At the same time, the hole(s) for any (system) connectors are covered also presenting a neat uninterrupted configuration to the holder. In addition, the arm 20 is sprung so that when the handset 100 is inserted into the holder 10 it does not come to rest suddenly. The arm acts as a slight cushion so that the phone is lowered gently into the holder. This also has the added advantage that any tolerances between the phone and insert can be taken up by this sprung effect. As the arm rotates, it clicks, with an audible sound making the user aware of the position of the arm.

It should be understood that the foregoing description is only illustrative of the invention. Various alternatives and modifications can be devised by those skilled in the art without departing from the invention. Accordingly, the present invention is intended to embrace all such alternatives, modifications and variances that fall within the scope of the appended claims.

## Claims

1. An electronic device holder (10), comprising:
a base (12) having an insert aperture (16) therein;
an insert (14A-14C) positioned in the insert aperture; and
a one-piece flexible member (4) connected to the base for supporting an electronic device disposed in the insert.

2. The holder according to claim 1, wherein the base is made of at least one of a metal or a plastic.

3. The holder according to claim 1 or 2 wherein the base has at least one opening for insertion of the one-piece flexible member and the base having shoulders that support the one-piece flexible member in a raised position.

4. The holder according to claim 3, wherein the one-piece flexible member is made of at least one of a plastic material or a tubing.

5. The holder according to claim 1, wherein the base has a lower base portion and an upper base portion.

6. The holder according to claim 5, wherein the lower base portion has a seating surface, a base lower portion opening, and a lower base portion receptacle for mating connector elements to a power source.

7. The holder according to claim 6, wherein the insert aperture is disposed in the upper base portion and has an insert aperture inner portion, an outer portion, a lip, and a bottom portion.

8. The holder according to claim 7, wherein the insert aperture inner portion has sloped inner walls.

9. The holder according to claim 7, wherein the insert has a male electrical connector extending through the insert aperture inner portion into a female electrical connector in the lower base portion which is connected to an electrically conductive wire disposed through the base lower portion opening, with the electrically conductive wire in turn connected to the lower base portion receptacle.

10. The holder according to claim 9, wherein the power source energizes the electrically conductive wire, the electrically conductive wire energizes the female electrical connector and the female electrical connector energizes the male electrical connector and the male electrical connector energizes the electronic device placed in the insert.

11. The holder according to claim 9 or 10 wherein the male electrical connector is a pin and the female electrical connector is a socket.

12. The holder according to any preceding claim, wherein the insert is removeably positioned in the insert aperture.

13. The holder according to any preceding claim, wherein the one-piece flexible member is pivotably mounted in the base to pivot relative to the base between a lowered position and a raised position.

14. The holder according to any preceding claim, wherein the holder is portable.

15. An electronic power station, comprising:
a base;
a flexible arm having spindles attached to the base, the base containing at least one corresponding opening for the spindles, the base also having an insert aperture therein; and
an interchangeable insert removably disposed in the insert aperture for holding an electronic device, wherein the flexible arm cushions the electronic device, wherein the interchangeable insert is selected from a number of different interchangeable inserts which can be interchanged in the insert aperture to accommodate different electronic devices.

16. The station according to claim 15, wherein the flexible arm is a one-piece member, shaped in a form of an outer perimeter of the base.

17. The station according to claim 15 or 16, wherein the flexible arm flexes in a down position.

18. The station according to claim 15, 16 or 17 wherein the flexible arm is biased in a down position against a rear edge of the base.

19. The station according to any one of claims 15 to 18 wherein the flexible arm has a padded section of elastomeric material.

20. The station according to claim 19, wherein the padded section of the flexible arm has a seam.

21. The station according to claim 19, wherein the padded section of the flexible arm is seamless.

22. The station according to any one of claims 15 to 21 wherein the interchangeable insert comprises an insert central portion, an insert bottom portion, and at least one sloped wall, all within a plastic insulating frame that defines the insert aperture.

23. The station according to claim 22, wherein the insert bottom portion is press fitted with at least one metal contact for connection to a female connector in the insert aperture connected to an electrically conductive wire in the base in turn connected to a base electrical receptacle for connection to a power source.

24. The station according to claim 23, wherein the at least one metal contact of the insert bottom portion comprises a flexible spring having a tab portion.

25. The station according to claim 24, wherein the at least one metal contact of the insert bottom portion is made of at least one of a copper metal or an aluminum alloy metal.

26. The station according to claim 22, wherein the insert bottom portion further comprises a terminal portion, the terminal portion projects from a lower side of the insert bottom portion, the insert bottom portion contains an electrical receptacle that connects to the at least one metal contact, wherein the at least one metal contact is at least one spring contact.

27. The station according to claim 22, wherein the at least one sloped wall of the insert is comprised of a plurality outer walls sloped to conform to a slope of a plurality of inner walls of the insert aperture.

28. The station according to claim 22, wherein the insert central portion includes an insert lip surrounding the insert central portion having a conformed fit to a rim of the insert aperture.

29. The station according to claim 28, wherein the insert central portion has a lower surface seatable against a bottom of the insert aperture.

30. The station according to claim 15, wherein the interchangeable insert has an insert multi-contact male pin connector that forms an electrical connection with a base electrical receptacle upon insertion of the interchangeable insert into the insert aperture, wherein the base electrical receptacle attaches to an electrically conductive wire connected to the base electrical receptacle for connection to a power source to form a complete circuit.

31. The station according to claim 30, wherein the power source energizes the base electrical receptacle, the base electrical receptacle energizes the electrically conductive wire, the electrically conductive wire energizes the base electrical receptacle, the base electrical receptacle energizes the insert multi-contact male pin connector, the insert multi-contact male pin connector energizes a mobile electronic device placed in the interchangeable insert.

32. The station according to claim 30, wherein the insert multi-contact male pin connector comprises a uniform serial bus connector.

33. The station according to claim 30, wherein the insert multi-contact male pin connector has a housing.

34. The station according to claim 33, wherein the housing is made of at least one of an insulating plastic or a metal.

35. The station according to claim 26, wherein the interchangeable insert comprises a generally rectangularly shaped handset receiving receptacle containing at least one spring contact extending through the terminal portion for connection to the base electrical receptacle, upon handset insertion into insert aperture, wherein insertion of a handset completes a circuit to a power source connected to the base.

36. The station according to claim 26, wherein the insert has a generally elliptically shaped handset receiving receptacle.

37. A freestanding handset holder, comprising:
an electrically conductive insert contained in an electrically wired casing for holding a handset; and
a generally U-shaped frame attached to the electrically wired casing in a raised position, wherein the U-shaped frame cushions the handset held in the insert.

38. The holder according to claim 37, wherein the casing has a casing upper section and a casing lower section.

39. The holder according to claim 37, wherein the casing lower section has mated cutouts for attachment of the U-shaped frame.

40. The holder according to claim 38, wherein the casing lower section defines shoulders formed on at least one side of the casing from a wider midsection to a narrower front.

41. The holder according to claim 37, wherein the electrically wired casing is energized by a power source, the power source energizes the electrically conductive insert that energizes the handset.

42. A method of holding an electronic device, comprising the steps of:
providing an electrically connectable base with an insert aperture and the electrically connectable base having at least one base opening for at least one pivotable arm with at least one spindle;
placing an electrically connectable insert into the insert aperture;
placing the at least one pivotable arm spindle into the at least one base opening;
placing the electronic device in the electrically conductable insert to complete a circuit through the electrically connectable insert and the electrically connectable base; and
positioning the at least one pivotable arm to brace the electronic device, wherein the electronic device can be removed and the pivotable arm placed in a down position by including the steps of:
pushing the at least one pivotable arm in a downward direction; and
snapping the at least one pivotable arm into a down position.

43. The method according to claim 42, wherein the pushing of the at least one pivotable arm causes the flexing of at least one spindle attached to the at least one pivotable arm.

44. The method according to claim 42, wherein the snapping of the at least one pivotable arm attached to the at least one spindle causes a biasing of a top of the at least one pivotable arm against a rear edge of the electrically connectable base.

45. An electronic device holder, comprising:
a base having an insert aperture, and an electrical receptacle connected to electrical wiring in a lower base portion attached to a first electrical connector extending into the insert aperture the base having at least one spindle aperture;
a number of different interchangeable inserts sized and shaped to be received in the insert aperture and adapted for receiving an electronic device, each of the different interchangeable inserts having a different predetermined characteristic and having a second electrical connector in an electronic device receiving receptacle; and
at least one pivotable arm having at least one spindle adapted to be received into the at least one spindle aperture.
